# EUROPÄISCHE PATENTSCHRIFT

(11) **EP 2 881 078 B1**
(45) Veröffentlichungstag und Bekanntmachung des Hinweises auf die Patenterteilung: **09.03.2016**
(21) Anmeldenummer: 14192888.7
(22) Anmeldetag: 12.11.2014
(51) Int. Cl.: B22C 9/04, C22C 19/07, B22C 1/18, A61C 13/20, B22C 9/00, C04B 35/14, C04B 35/622, C04B 35/63, C04B 35/632

(54) **Keramische Einbettmasse sowie Verfahren zur Herstellung von Präzisionsgussteilen**
Ceramic embedding compound and method for making precision castings
Matière d'enrobage céramique et procédé de fabrication de pièces moulées de précision

(30) Priorität: 05.12.2013 DE 102013113560
(43) Veröffentlichungstag der Anmeldung: 10.06.2015
(73) Patentinhaber: SHERA-Werkstofftechnologie GmbH & Co.KG, 49448 Lemförde (DE)
(72) Erfinder: Nowack, Norbert, 49448 Hüde (DE); Happ, Anna, 49448 Lemförde (DE)
(74) Vertreter: Fritz, Edmund Lothar

(56) Entgegenhaltungen:
- EP-A2- 0 195 690
- UDC 541 183 ET AL: "MODIFICATION OF HIGHLY DISPERSED SILICA WITH ZIRCONIUM ACETYLACETONATE", THEORETICAL AND EXPERIMENTAL CHEMISTRY., Bd. 44, Nr. 44, 1. Januar 2008 (2008-01-01), Seiten 191-195, XP55163038, US ISSN: 0040-5760

## Beschreibung

Die vorliegende Erfindung betrifft eine keramische Einbettmasse zur Herstellung einer Gießform für dentalmedizinische Anwendungen, wobei die Einbettmasse hergestellt wird ausgehend von einer Keramik-Pulvermischung enthaltend ein phosphathaltiges Bindemittel, die mit einem Kolloidbildner oder Gelbildner angemischt wird.

Die Gießform muss zur Kompensation einer Volumenkompensation beim Übergang flüssigefeste Legierung (Solidus-Liquidus-Temperaturbereiche 800 bis 1700 °C je nach Legierungsart) und der nachfolgenden Volumenkontraktion beim Abkühlen auf Raumtemperatur so gezielt zur Expansion gebracht werden, dass diese Volumenkontraktion durch Expansionen kompensiert werden kann. Nur hierdurch lassen sich passgenaue Metallgussteile für die Herstellung von Prothetikteilen (zum Beispiel Kronen-, Brücken-, Teleskopteile und herausnehmbarer Zahnersatz) in der Zahnmedizin herstellen.

Die Expansion setzt sich zusammen aus a) der Abbindeexpansion und b) der thermischen Expansion. Beide Expansionsarten ergänzen sich zur Gesamtexpansion.

Die Erhöhung der thermischen Expansion mittels Zirkoniumcarbid (ZrC) ist Gegenstand der nicht vorveröffentlichten älteren Patentanmeldung der Anmelderin mit dem Aktenzeichen DE 10 2013 109 039.7 vom 21.8.2013. Das Problem "thermische Expansion" wurde durch das dort beschriebene Verfahren befriedigend gelöst. Auf den Inhalt dieser älteren Anmeldung wird hiermit in vollem Umfang Bezug genommen.

Zu lösen ist noch eine wesentliche Erhöhung der Abbindeexpansion, ohne dass sich die anderen positiven Eigenschaften der Gussform ändern. Damit hängt die Steuerung der Abbindeexpansion (also ihre Einstellung von Fall zu Fall mittels der Kieselsolkonzentration) zusammen. Es muss eine hohe, aber eine einstellbare Abbindeexpansion mit einer großen Bandbreite, herbeigeführt werden, weil die Einbettmassen, die verschiedenen Legierungstypen und die verschiedenen Aufgabenstellungen sich von Fall zu Fall stark unterscheiden. Dies ist allein über die thermische Expansion nur begrenzt möglich.

Die Gussformen kommen insbesondere zum Einsatz für CoCrMo-, CoCrMoW- und Au-Basislegierungen zur Herstellung von Teleskop-, Kronen- und Brücken- und Modellguß-Teilen in der Dentaltechnik und dienen damit der zahnärztlichen Versorgung von Patienten mit Zahnersatzteilen. Es können beispielsweise die gleichen Legierungstypen eingesetzt werden, wie sie in der Anmeldung DE 10 2013 109 039.7 beschrieben sind. Die Anforderungen an die Präzision sind ebenfalls, wie in der oben genannten DE 10 2013 109 039.7 beschrieben wurde, einzuhalten. Dort ging es um die Erhöhung der thermischen Expansion und nicht um die Steuerung einer Einbettmasse.

### Stand der Gußtechnik zur Herstellung von Prothetikteilen in der Dentaltechnik

Die EP 2 062 665 A1 beschreibt eine keramische Einbettmasse zur Herstellung einer Giessform sowie ein Verfahren zu deren Herstellung. In dieser Anmeldung wird die Verwendung von organischen Stoffen (Mehrstoffsysteme Isopropanol, Ölsäure und Natriumpolyphosphat) zur Herbeiführung einer notwendigen Abbindeexpanion von phosphatgebundenen Einbettmassen beschrieben. Das Ziel dieser Erfindung war der Ersatz von Kieselsol-Lösungen. Damit die Kieselsol-Lösung ersetzt werden können, muss natürlich eine entsprechend hohe Abbindeexpansion auch vorhanden sein. Der Einsatz von organischen Stoffen in hoher Konzentration führt zu einer starken Verdampfung und Verbrennungsvorgängen des organischen Bindemittels beim Erhitzen der "grünen" Gussform. Die Anwendung dieser Technik erfordert wegen der Crackprozesse besondere Arbeitssicherheitsvorkehrungen. Die Verwendung des Natriumsalzes Natriumpolyphosphat führt zu unerwünschten Sinterungsprozessen und Verglasungsvorgängen der Einbettmasse bei der Herstellung der Gussform. Die Gussform härtet aus und das Ausbetten von filigranen Gussteilen wird problematisch.

Die EP 1 611 977 A1 beschreibt keramische Einbettmassen zur Herstellung von Präzisionsgussformen für Gussteile aus Titan, Zirkonium oder deren Legierungen. Es wird eine Gießtechnik für Ti, Zr und deren Legierungen beschrieben. Die Einbettmasse besteht aus den Oxiden CaO, Al₂O₃. MgO. Die Anmischflüssigkeiten zum Abbinden der Einbettmasse enthielten Lanthan- oder Ytteriumsalze. Der Abbindevorgang wird durch die Fällung von Lanthan(III)- bzw. Ytterium(III)-hydroxid mittels MgO ausgelöst. Durch diese Wahl der Oxide ist gewährleistet, dass gegenüber den sehr aggressiven Ti oder Zr-Schmelzen sich die Gussformen praktisch inert verhalten und es nur zu minimaler alpha-case-Versprödung kommt. Die Abbindeexpansionen sind allerdings sehr gering, sie liegen bei etwa 0 %. Die Abbindezeiten liegen im Bereich um 5 h. Hingegen strebt die vorliegende Erfindung die Herstellung eines Ti-Gußteiles ohne Bildung einer alpha-case-Schicht an. Eine alpha-case-Schicht beruht auf einer intensiven Sauerstoffaufnahme aus einer Reaktion flüssiges Ti und Keramik, die zu einer extremen Versprödung des Gussteiles führt. Dies sollte vermieden werden.

Die EP 0916 430 A1 beschreibt ein Verfahren zur Steuerung und Einstellung der Expansion von keramischen Einbettmassen. Es handelt sich um quarzfreie Einbettmassen auf der Basis MgO-ZrO₂-Al₂O₃, die für die Herstellung von Feingussteilen aus Ti Verwendung finden (Vermeidung der alpha-case-Versprödung). Zur Erzielung einer notwendigen Abbindeexpansion werden Di- oder Tricarbonsäuren eingesetzt, die mit dem MgO reagieren. Um eine hinreichend hohe Abbindeexpansion zu erzielen, muss der Carbonsäuregehalt relativ hoch sein (bis 0,7 Gew.-%). Die Abbindereaktion wird dadurch stark verzögert (über 30 min). Hier liegen ein anderes Keramiksystem und eine andere Anwendung vor als in der vorliegenden Anmeldung.

Die EP 1 043 094 A1 beschreibt ein Verfahren zur Herstellung von Gusswerkstücken und einer Einbettmasse. Es handelt sich um eine quarzfreie Einbettmasse, ähnlich wie bei der EP 0 916 430 beschrieben.

Ein Verfahren zur Herstellung filigraner Präzisionsgussteile sowie eine keramische Gusseinbettmasse beschreibt die DE 101 10 687.4 A1. Diese Druckschrift handelt von der Wirkung anorganischer Säuren auf die Abbindeexpansion von keramischen Gusseinbettmassen des Typs MgO-NH₄H₂PO₄-SiO₂-Modifikationen. Die erhöhte Abbindeexpansion beruht auf der Wirkung der Amidosulfonsäure (NH₂SO₃H) oder Ammoniumhydrogensulfat (NH₄HSO₄) oder Diphosphorpentoxid (P₂O₅) oder Diphosphorsäure (H₄P₂O₇) in Zusammenwirken mit MgO, also eine reine Säure-Base-Reaktion. Beim Glühen der Gussform bildet sich Magnesiumsulfat (aus NH₂SO₃H bzw. NH₄HSO₄)oder Magnesiumphosphate (aus P₂O₅ bzw. H₄P₂O₇). Auf der einen Seite werden nur erhöhte Abbindeexpansionen zwischen 2,4 bis 2,8 % (0,4 bis 0,6 Gew.-%) erzielt. Aus den schwefelhaltigen Verbindungen werden hier Sulfate als unerwünschte Keramikbestandteile gebildet. Dies ist ein gravierender Nachteil, weil durch Metall-Schlacke-Reaktionen im Augenblick des Vergießens der flüssigen Legierung eine unerwünschte Aufschwefelung der Legierung erfolgt. Die Sulfate zersetzen sich im Hochtemperaturbereich unter Bildung von SO₂. Durch Verschlackungsreaktionen sinkt in der Gussform der Sauerstoffpartialdruck im Augenblick des Vergießens, so dass eine Aufschwefelung des Metallgusses erfolgt. Die Korrosionsbeständigkeit des Gussteiles und damit die Biokompatibilität werden gefährdet und herabgesetzt. Die Biokompatibilität wird schon durch Schwefelgehalte im ppm-Bereich (Bereiche oberhalb 20 ppm) drastisch herabgesetzt. Bei der Herstellung der Legierungstypen CoCrMo, CoCrMoW oder CoCrW-Legierungen wird sehr genau darauf geachtet, dass der Schwefelgehalt unterhalb von 20 ppm bleibt. Bei der Verwendung der Additive P₂O₅ oder H₄P₂O₇ liegt ein Herstellungsproblem vor. Diese Additive sind äußerst hygroskopisch, so dass die Produktion unter strengem Ausschluss von Feuchtigkeit stattfinden muss. Auch das Packungsmaterial muss das Einbettmassenpulver absolut hermetisch vor Luftfeuchtigkeit abschotten und die offene Lagerung der Einbettmassenpulver muss vermieden werden. Dies alles sind Hindernisse (niedrigere Abbindeexpansionen, Veränderungen durch hygroskopische Eigenschaften, Aufschwefelungen) die die erfindungsgemäße Lösung zu beseitigen sucht.

Die DE 101 15 820 A1 beschreibt ein Verfahren zur Herstellung vollkeramischer Dentalformteile, bei dem aus einer Suspension keramische Partikel elektrophoretisch auf einem Modell abgeschieden werden, um ein Zahnformteil zu bilden. Der Hauptbestandteil des Modelles ist Gips (Calciumsulfat-Hydrate). Die Suspension besteht aus organischem Lösungsmittel (Ethanol, Acetylaceton...) mit Wasser, einem löslichen Polymer (lösliches Klebemittel in dem Lösungsmittelgemisch Ethanol-Acetylaceton-Wasser) und feinverteilten Partikeln wie Aluminiumoxid oder auch Zirkondioxid-Pulver. Die in dieser Schrift erwähnte Abbindeexpansion zur Kompensation des Sintervorgangs bezieht sich auf das Gipsmodell, das eine entsprechend hohe Abbindeexpansion aufweisen soll und nicht auf die durch Elektrophorese abgeschiedenen Partikel. An dem Abbindevorgang ist Acetylaceton als fluide Phase für die KEramikpartikel nicht beteiligt. Der Abbindevorgang findet hier zeitlich vor der elektrophoretischen Abschidung der Partikel statt. Nach der abschiedung der Partikel verflüchtigen sich die Lösungsmittel. Das Zirkonoxid reagiert nicht mit Acetylaceton. Reines Acetylaceton zeigt keine Wirkung auf das Abbindeverhalten der Einbettmassen.

In der EP 0 195 690 A2 ist eine Zusammensetzung für einen Liner beschrieben, die neben einem Polymeren, welches ein Carboxyl-haltiges Vinylmonomeres umfasst, eine Lösung aus einem Zirkonium-Chelat des Acetylacetons enthält. Der Zr(IV)-Chelatkomplex wird hier zur Modifizierung des Polymeren verwendet. Die Anwendung bezieht sich auf die Ausbesserung von schadhaften Stellen im Zahngewebe des Dentin-Bereiches. Dadurch sollen Irritationen des Nervs im Zahnkörper verringert werden.

Die Aufgabe der vorliegenden Erfindung besteht darin, eine keramische Einbettmasse zur Herstellung einer Gießform für Präzisionsgussteile für dentalmedizinische Anwendungen der eingangs genannten Gattung zur Verfügung zu stellen, welche eine erhöhte Abbindeexpansion aufweist.

Die Lösung dieser Aufgabe liefert eine keramische Einbettmasse der eingangs genannten Gattung mit den Merkmalen des Hauptanspruchs.

Erfindungsgemäß ist vorgesehen, dass die Keramik-Pulvermischung, von der ausgegangen wird, Zr(IV)-acetylacetonat enthält.

Die vorliegende Anmeldung handelt von der präzisen Herstellung von Gussformen mittels der Abbindeexpansion [Fall a)]. Zum Einsatz kommt der hochwirksame Stoff Zirkoniumacetylacetonat. Damit ist die gezielte Einstellung der Abbindeexpansion (bis zu 5 %) vorzugsweise in MgO-NH₄H₂PO₄-Kieselsollösungen (Bindemittel) und den feuerfesten Oxiden alpha-Quarz und alpha-Cristobalit möglich, ohne dass zeitliche Verzögerungen oder Beschleunigungen des Abbindens oder Temperaturänderungen beim Abbinden eintreten (im Vergleich zu den genannten konventionellen Einbettmassen). Die Herstellung der Gussform aus den oben genannten Komponenten ist eine bekannte Technik. Neu ist der erfindungsgemäße Zusatz von Zirkoniumacetylacetonat. Die Wirkung dieser Verbindung in derartigen Einbettmassen war zum Zeitpunkt der vorliegenden Anmeldung unbekannt. Mit dem Einsatz von Zirkonium(IV)-acetylacetonat ist die Bildung des hochbeständigen Keramikstoffes Zirkonium(IV)-oxid in der Keramikgussform verbunden, der sich sehr stabilisierend auswirkt und einem Sinterungsprozess bei hohen Temperaturen (bis 900 °C = Vorwärmtemperatur der Gussform) entgegen wirkt.

Die bei der Behandlung des Standes der Technik genannten Nachteile (intensive Verbrennungsvorgänge, Umgang mit organischen Lösungsmittels und Aushärtung der Gussform bei der Wärmebehandlung) sind bei der erfindungsgemäßen Verwendung von Zirkonium(IV)-acetylacetonat nicht vorhanden. Die katalytische Wirkung von Zirkonium(IV)-acetylacetonat erfordert nur den Einsatz sehr geringer Mengen dieses Stoffes (bevorzugt unterhalb von etwa 0,4 Gew.% oder sogar beispielsweise wesentlich unterhalb von etwa 0,3 Gew.-%, je nach Anforderung an die Passgenauigigkeit) in konventionellen Einbettmassen. Das einmalige an Zirkonium(IV)-acetylacetonat ist die hohe Wirksamkeit im Bereich geringer Konzentrationen. Das führt zu einer enormen Vereinfachung der Herstellung der Einbettmassen. Man benötigt keine komplizierten Anmischflüssigkeiten wie sie in EP 2062 665 A1 beschrieben wurden. Mit Zirkonium(IV)-acetylacetonat wird eine höhere Abbindeexpansion erzielt als bei den oben beschriebenen bekannten Lösungen (bis 4,9 %, mit wesentlich geringeren Konzentrationen, beispielsweise 0,2 Gew.-% des Einsatzes).

Es ergeben sich daher die nachfolgend genannten Vorteile bei der Verwendung von Zirkonium(IV)-acetylacetonat:
es ist nicht hygroskopisch;
es ist in den Einbettmassenpulvern unbegrenzt stabil;
es hat aufgrund bestimmter katalytischer Eigenschaft hohe Abbindeexpansionen zur Folge;
bei unveränderten Abbindezeiten im Bereich von 8 bis 11 min,
bei unveränderten Abbindetemperaturen im Bereich von 78 bis 88 °C;
nur kleine Anteile (0,01 Gew.-%) erzeugen den einstellbaren hohen Abbindeexpansions-Effekt (katalytischer Effekt);
die hohe Abbindeexpansion kann durch die Konzentration der Kiesellösung in weiten Bereichen variiert (Steuerung) werden;
es bildet beim Glühen den sehr stabilen und erwünschten Oxidbestandteil Zirkonium(IV)-oxid (ZrO₂) in der geglühten Gussform;
dadurch ergibt sich ein unverändertes geringes Sinterungsverhalten der Gussform: -0,08 % bei 950 °C/1h.

### Chemische Grundlagen der Erfindung

Zirkonium(IV)-acetylacetonat besitzt die Summenformel Zr(C₅H₇O₂)₄. Die genaue Nomenklaturbezeichnung lautet: Tetrakis(2,4-pentadionato)-zirkonium(IV). Der Chelat-Komplex ist im Handel in den Reinheiten 98-90 Gew.% erhältlich. Übliche Nebenbestandteile sind Zirkonium(IV)-oxid und entsprechende Hafniumverbindungen (bis 1,5 Gew.-%). Die Nebenbestandteile sind nicht störend.

Die Verbindung ist in Wasser löslich mit 14 g/l (20 °C) und sehr beständig. Obwohl Zirkonium(IV)-orthophosphat ein sehr geringes Löslichkeitsprodukt besitzt, lässt sich aus diesem Komplex keine Zr-Phosphat-Fällung nachweisen. Damit scheidet eine Fällungsreaktion als Ursache der erhöhten Abbindeexpansion zwischen der Phosphat-Komponente und dem Zr-Komplex aus, was nicht heißt, dass es dennoch eine andere Reaktion gibt.

Die chemische Wirkung von Zirkonium(IV)-acetylacetonat auf hochdisperses SiO₂ wird in der Literatur beschrieben:
N.V. Borisenko, I.Ya. Sulim und L.I. Borisenko : "Modification of highly dispersed silica with Zirconium acetylacetonat" in Theoretical and Experimental Chemistry, Vol. 44, No. 3, 2008, p.200-204.
Zirkonium(IV)-acetylacetonat reagiert mit Si-O-Gruppen, wie sie im Kieselsol vorliegen, wie folgt (acetylacetonat abkürzend acac):

   **Zr(acac)₄ + ≡Si-O- → ≡Si-O-Zr(acac)₃ + acac** **(1)**

Es wird ein acac-Ligand gegen eine Si-O-Gruppe ausgetauscht.

Beim Erhitzen aus der Verbindung ≡Si-O-Zr(acac)₃ ab 140 °C werden ZrO₂-Nanopartikel in Gegenwart von Luft unter Bildung stabiler Silanol-Gruppen gebildet:

**≡Si-O-Zr(acac)₃ → ≡Si-O-H + ZrO₂ + CO₂ + H₂O** **(2)**

Da Phosphate (Oxidationsstufe 5+) ebenfalls Netzwerkbildner sind, ähnliche Basizitäten (siehe optische Basizität/Elektronegativität) besitzen, kann man davon ausgehen, dass auch P^{(V)}-O-Liganden den Ligand acac ersetzen können:

**Zr(acac)₄ + P⁽⁵⁺⁾-O- → P⁽⁺⁵⁾-O-Zr(acac)₃ + acac** **(3)**

Diese Reaktionsmechanismen sind für den Zr(acac)₄-Komplex gut bekannt, da der LigandenAustausch für viele Katalysevorgänge nachgewiesen wurde. Der Komplex ist thermodynamisch sehr stabil, aber kinetisch besteht eine Tendenz zum Ligandenaustausch.

Die Erfinder der vorliegenden Anmeldung haben gefunden, dass die Ursache für Abbindeexpansionen in phosphatgebundenen MgO-Einbettmassen die Umwandlung vom Sol zum Gel (SiO₂ als auch gelartiges Mg(NH₄)PO₄·aq) ist. Bei der Reaktion MgO mit NH₄H₂PO₄ entsteht zunächst Mg(NH₄)PO₄·aq in Gelform. Es bildet sich nicht die kristalline Form Mg(NH₄)PO₄·6H₂O (mineralogische Bezeichnung Struvit). Das Zirkonium(IV)-acetylacetonat ist Stabilisator für die Gelphase und behindert die Bildung kristalliner Verbindungen. Kristalline Verbindung (wie Mg(NH₄)PO₄·6H₂O/Struvit) besitzen, wie sich aus Forschungsarbeiten der Anmelderin ergeben hat, wesentlich geringere Expansionswerte.

Durch die Expansion der Einbettmassen während des Abbindevorganges werden Drucke über 100 N/mm² erzeugt. Die Wirkung von Zirkonium(IV)-acetylacetonat auf das Abbindeverhalten tritt schon messbar ab etwa 0,008 bis 0,01 Gew.-% Zirkonium(IV)-acetylacetonat auf (überraschender Effekt). Ab rund 1,0 Gew.-% Zirkonium(IV)-acetylacetonat (96 Gew.-% ige Qualität) verlaufen die Expansionswerte in der Regel gegen einen Grenzwert von 5 %.

Wie Vergleichsversuche gezeigt haben, können derartige Expansionen in phosphatgebundenen MgO Einbettmassen mit Kieselsol-Lösungen **nicht** durch die folgenden (handelsüblichen) Acetylaceton-Verbindungen erzeugt werden:
Beispiele/Auswahl (erfolglose Versuche damit):
   Al(acac)₃ = Aluminium-acetylacetonat,
   Li(acac) = Lithium-acetylacetonat,
   oder auch Acetyl-aceton alleine.

Das Verhalten des Zirkonium(IV)-acetylacetonat ist einmalig und passt zu seinen häufig genannten und beschriebenen katalytischen Eigenschaften.
Es könnten eventuell durch den völlig analogen Hafnium(IV)-acetylacetonat-Komplex ähnliche Expansionswerte erzielt werden, aber Hf ist wesentlich kostspieliger als Zr.

Die vorliegende Erfindung betrifft insbesondere die Verwendung einer keramischen Einbettmasse (Gusseinbettmasse) des Typs phosphatgebundenes MgO-SiO₂ in der Dentalmedizin zur Herstellung von passgenauen Teleskop-Gussteilen, beispielsweise Teleskopkronen.

Teleskopkronen sind in der Dentaltechnik jede Art von Doppelkronen.
Doppelkronen bestehen aus einer festsitzenden Primärkrone und einer darüber geschobenen Sekundärkrone. Die Primärkrone wird bei der Eingliederung in der Regel mit einem Zement auf den beschliffenen Zahnstumpf zementiert, während die Sekundärkrone in die Zahnprothese eingearbeitet wird. Beim Einsetzen der Prothese Primär- und Sekundärteil werden beide Teile teleskopartig ineinander geschoben. Dadurch wird der gewünschte Halt hergestellt. Das metallische Kronenmaterial sind beispielseweise übliche Dentallegierungen auf der Basis CoCrMo, CoCrMoW, NiCrMo oder auch Au-, Pd, Pt-metallhaltige Legierungstypen. Die durch Passung festsitzende Primärkrone (ist zementiert worden) mit der darüber zu schiebenden Sekundärkrone müssen so genau übereinander gleitend geschoben werden, dass eine Haftung durch den Mundspeichel (Adhäsionskräfte) gegeben ist, so dass beide Teile hinreichend verbunden sind. Die Abzugskräfte zwischen festsitzender Krone und darauf geschobener Krone müssen so stark sein, dass im normalen Kauzyklus die Prothese sich nicht lockert, aber die Prothese vom Patienten zu Reinigungszwecken noch herausgenommen werden kann. Aus diesem Grunde muss die Friktion so klein sein.

Im Falle der Teleskop-Gusstechnik muss das Sekundärteil eine geringe, aber eine gezielte Spaltbildung zum Primärteil aufweisen. Die Spaltbildung sollte in der Regel +20 bis +100 µm betragen. Grenzen für die Gesamtexpansion sind gegeben durch die Summe aus der maximalen Abbindeexpansion und der thermischen Expansion.

Das Primärteil muss schon einen Spalt zum Zahnstumpf aufweisen. Dieses Primärteil muss durch eine haftende Klebeverbindung zwischen Zahnstumpf und Primärteil fest verbunden (einzementiert) werden. Dadurch muss das Primärteil einen Spalt in der Größenordnung von 50 bis 100 µm zum Zahnstumpf aufweisen. Die vergrößerte Geometrie des Primärspaltes wird in der Gusstechnik durch das Zusammenwirken von Abbindeexpansion (einstellbar) und thermischer Expansion (nicht variabel) verwirklicht. Das darüber zu schiebende Sekundärteil muss nochmals eine vergrößerte Geometrie mit geringem Spalt zum Primärteil aufweisen. In diesem Anwendungsbereich ist es daher besonders vorteilhaft, wenn erfindungsgemäß die Abbindeexpansion erhöht wird.

Vorzugsweise enthält die Keramik-Pulvermischung, von der ausgegangen wird, einen Anteil von wenigstens etwa 0,008 Gew. %, vorzugsweise wenigstens etwa 0,05 Gew. % Zr(IV)-acetylacetonat. Besonders bevorzugt enthält die Keramik-Pulvermischung, von der ausgegangen wird, einen Anteil von bis zu etwa 0,5 Gew %, vorzugsweise einen Anteil von bis zu etwa 0,2 Gew. % Zr(IV)-acetylacetonat.

Als Kolloidbildner oder Gelbildner für die keramische Einbettmasse kann beispielsweise eine wässrige Kieselsol-Lösung mit einem Gehalt von bis zu etwa 40 % verwendet werden.

Die Keramik-Pulvermischung, von der ausgegangen wird, enthält vorzugsweise MgO, beispielsweise in einer Menge von etwa 5 % bis etwa 10 %.

Gemäß einer bevorzugten Weiterbildung der erfindungsgemäßen Lösung enthält die Keramik-Pulvermischung, von der ausgegangen wird, als phosphathaltiges Bindemittel ein Gemisch aus einem reaktiven MgO sowie NH₄H₂PO₄ .Weiterhin enthält die Keramik-Pulvermischung, von der ausgegangen wird, vorzugsweise als überwiegenden Bestandteil SiO₂ in der Modifikation als alpha-Quarz und/oder alpha-Cristobalit oder auch als amorphes SiO₂ (Glas).

Gegenstand der vorliegenden Erfindung ist weiterhin ein Verfahren zur Herstellung von Präzisions-Gussteilen für dentalmedizinische Anwendungen, bei dem man einen Einbettmassebrei herstellt aus einer Keramik-Pulvermischung enthaltend ein phosphathaltiges Bindemittel, die mit einem Kolloidbildner oder Gelbildner angemischt wird, wobei die Keramik-Pulvermischung einen Anteil an Zr(IV)-acetylacetonat enthält, man den Einbettmassebrei in einen Behälter überführt, in dem sich ein Abdruck des anzufertigenden Gussteils aus einem Wachs- oder einem Kunststoffmaterial befindet, man danach die keramische Einbettmasse abbinden lässt und erwärmt, und wobei man in die aus der Einbettmasse erhaltene heiße Gießform einen Gusswerkstoff umfassend eine flüssige Legierung ausgewählt aus CoCrMo-, CoCrW, CoCrMoW- und Au-Basislegierungen einfüllt.

Schließlich ist Gegenstand der vorliegenden Erfindung die Verwendung einer keramischen Einbettmasse der zuvor beschriebenen Art zur Herstellung passgenauer Teleskop-Gussteile, wobei dies insbesondere passgenaue Teleskop-Kronen sind, wie zum Beispiel Doppelkronen bestehend aus einer festsitzenden Primärkrone und einer darüber geschobenen Sekundärkrone.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen
Figur 1 eine graphische Darstellung betreffend die Abbindeexpansion in % für Keramikmischungen mit verschiedenen Anteilen an Zr(IV)-acetylacetonat;
Figur 2 eine weitere graphische Darstellung betreffend die Abbindeexpansion in % für Keramikmischungen mit verschiedenen Anteilen an Zr(IV)-acetylacetonat jeweils zu einer späteren Abbindezeit.

### Beispiele und Anwendungen

### Beispiel 1: Phosphatgebundene Einbettmasse für die Kronen-Brücken-Technik

### Zusammensetzung (Basis):

Als Binder wurde kaustisches (=reaktives) MgO (7 Gew.-%) - NH₄H₂PO₄ (12 Gew.-%) verwendet. Als feuerfeste Keramikbestandteile (restliche Bestandteile) dienten SiO₂-Modifikationen in Form von alpha-Quarz und alpha-Cristobalit-Partikeln. Das Partikel-Korndurchmesser-Spektrum betrug etwa 20 bis 300 µm. Zur Erhöhung der Abbindeexpansion erfolgte die Zumischung von Zirkonium(IV)-acetylacetonat in Pulverform (Reinheit 96 % ige, wasserfrei) in verschiedenen Anteilen. Diese Keramikmischungen (200 g) wurden jeweils angemischt mit 43 ml 25 %-iger wässriger Kieselsol-Lösung (Gewichtprozentangaben).

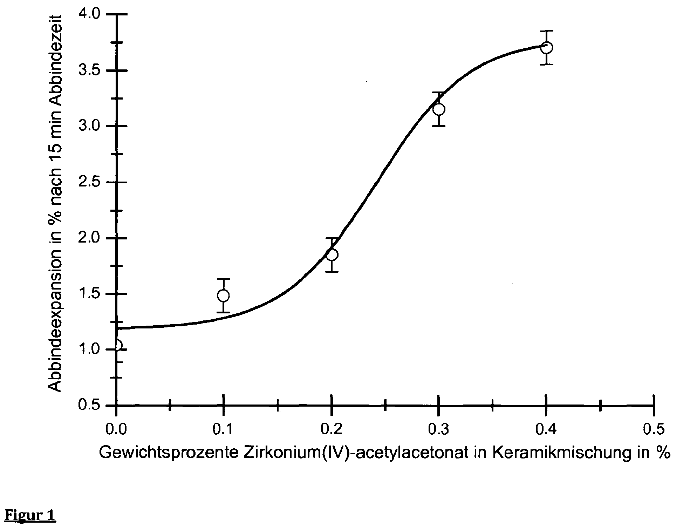

Die Messergebnisse sind in der **Figur 1** dargestellt:
Ohne den Zusatz von Zirkonium(IV)-acetylacetonat beträgt die Abbindeexpansion nach 15 min 1,1 %. Sie ist dann praktisch abgeschlossen (nahezu 99 %). Nach 9 min 15 sec durchläuft die Temperatur des Abbindevorganges das Temperaturmaximums mit 83 °C.

Bei einem Zusatz von 0,2 Gew.-% Zirkonium(IV)-acetylacetonat beträgt die Abbindeexpansion nach 15 min 1,80 %. Nach 20 min liegt der Abbindeexpansionswert bei 1,85 %. Sie ist dann praktisch abgeschlossen. Nach 9 min 45 sec durchläuft die Temperatur infolge der chemischen Reaktion des Abbindevorganges das Temperaturmaximum mit 83 °C.

Unter der gegebenen Zusammensetzung dieser Einbettmasse für die Kronen-Brückentechnik mit der Basis-Legierung Co67Cr28Mo5 (Nebenbestanteile unter 1 % sind C, Si, Mn) ist diese Abbindeexpansion optimal (passend für Kronen- und Brückenteile: Gussergebnisse und herausnehmbaren Zahnersatz/dentaltechnische Bezeichnung Modellguß). Eine Sinterung der Gussform beim Einhitzen auf 950 °C/1h fand praktisch nicht statt (-0,08 %).

Mit steigenden Zirkonium(IV)-acetylacetonat-Anteilen streben die Abbindeexpansionswerte asymptotisch gegen den Wert von 4 % (15 min, praktisch vollständiger Abbindevorgang). Das zeitliche Ende des Abbindevorganges liegt unverändert bei 15 min. Die Temperaturmaxima werden nach 9 min 30 sec bis 10 min 30 sec mit unveränderten Werten von 81 bis 83 °C durchlaufen.
Die Abbindeexpansionen einer Messreihe, mit Wiederholungen, "Abbindeexpansion in Abhängigkeit vom Zirkoium(IV)-acetylacetonat-Gehalt" sind in der **Figur 1** für die o.g. Basiszusammensetzung zusammenfassend dargestellt worden.

Unter Anwendung von Zirkonium(IV)-acetylacetonat Zusätzen lassen sich alle Abbindeexpansion-Eigenschaften je nach Zusammensetzung der Einbettmassenpulver und Zusammensetzung der Gusslegierung für die Kronen-Brücken-Technik als auch für den herausnehmbaren Zahnersatz (in der Fachsprache der Dentaltechnik auch als "Modellguss" bezeichnet) herstellen. Wichtig ist hierbei, dass sich weder die Temperaturentwicklung noch die Abbindezeiten durch den Zusatz von Zirkonium(IV)-acetylacetonat wesentlich ändern. Damit ist ein breiter Spielraum für die Anpassung an die Eigenschaften von unterschiedlichen Legierungen- und Einbettmassen-Typen sowie an die verschiedenen Verarbeitungstechniken in der Dentaltechnik gegeben.

### Beispiel 2: Phosphatgebundene Einbettmasse für die Teleskop-Technik

### Zusammensetzung (Basis):

Als Binder wurde kaustisches (=reaktives) MgO (7,5 Gew.-%) - NH₄H₂PO₄ (14 Gew.-%) verwendet. Als feuerfeste Keramikbestandteile (restliche Bestandteile) dienten 1,2 % ZrC und SiO₂-Modifikationen in Form von alpha-Quarz und alpha-Cristobalit-Partikeln mit einem Partikel-Korndurchmesser-Spektrum von beispielsweise 20 bis 300 µm.
Zur Erhöhung der Abbindeexpansion erfolgte die Zumischung von Zirkonium(IV)-acetylacetonat in Pulverform (96 % ige Reinheit, wasserfrei) in verschiedenen Anteilen. Diese Keramikmischungen (200 g) wurden jeweils angemischt mit 44 ml 30 %-iger wässriger Kieselsol-Lösung (Gewichtprozentangaben).

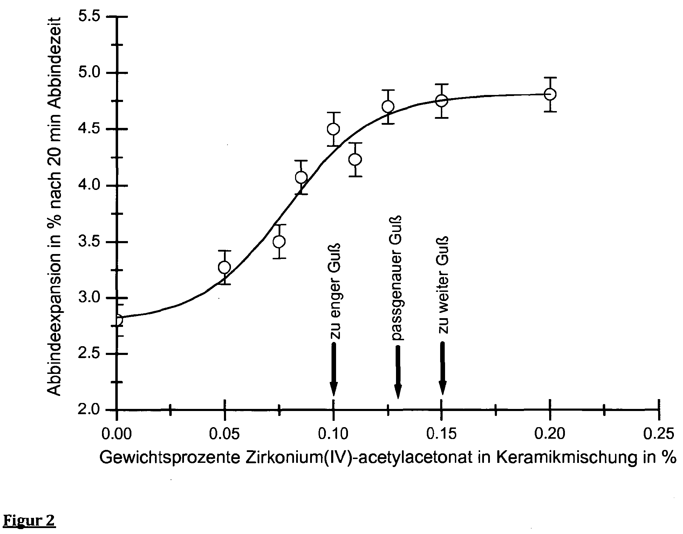

Die Messergebnisse sind der **Figur 2** zusammenfassend dargestellt worden:
Ohne den Zusatz von Zirkonium(IV)-acetylacetonat beträgt die Abbindeexpansion nach 20 min 2,8 %. Sie ist dann praktisch zeitlich abgeschlossen (nahezu 99 %). Nach 10 min 15 sec durchläuft die Temperatur des Abbindevorganges das Temperaturmaximums mit 87 °C.

Bei einem Zusatz von nur 0,05 Gew.% Zirkonium(IV)-acetylacetonat beträgt die Abbindeexpansion nach 20 min 3,25 % und bleibt praktisch konstant. Nach 11 min durchläuft die Temperatur infolge der chemischen Reaktion des Abbindevorganges das Temperaturmaximum bei 86 °C.

Aus der Darstellung gemäß **Figur 2** ist erkennbar, dass die Abbindeexpansionen mit steigenden Anteilen an Zirkonium(IV)-acetylacetonat stetig ansteigen. Für höhere Anteile an Zirkonium(IV)-acetylacetonat strebt die Abbindeexpansion asymptotisch gegen den Wert 4,8 % (0,2 Gew.-%). Die Temperaturmaxima lagen in allen Fällen zwischen 84 °C und 87 °C. Die Reaktionszeiten dafür lagen zwischen 11 min und 11 min 30 sec.

Unter der gegebenen Zusammensetzung ist diese Einbettmasse für die Teleskop-Technik beispielsweise für die Basis-Legierung Co65Cr21Mo6W6 (Nebenbestanteile unter 1 % sind Fe, Si, Mn) zur Herstellung des Sekundärteiles eines Teleskopes optimal.

Es wurden drei Präzisions-Gießversuche mit Legierungen Co65Cr21Mo6W6 durchgeführt, Teleskop-Sekundärteil:
(a) 0,10 % Zirkonium(IV)-acetylacetonat: Gussteil war zu eng
(b) 0,13 % Zirkonium(IV)-acetylacetonat: Gussteil war genau passend. Die Spalte zwischen Primär- und Sekundärteil des Metallgusses lagen bei +50 µm bis +80 µm.
(c) 0,15 % Zirkonium(IV)-acetylacetonat: Gussteil war zu weit.

Bezüglich weiterer Einzelheiten zum Thema Teleskop-Gußtechnik sei ergänzend auf die in der Anmeldung DE 10 2013 109 039.7 vom 21.8.2013 enthaltenen Ausführungen verwiesen.

## Patentansprüche

1. Keramische Einbettmasse zur Herstellung einer Gießform für dentalmedizinische Anwendungen, wobei die Einbettmasse hergestellt wird ausgehend von einer Keramik-Pulvermischung enthaltend ein phosphathaltiges Bindemittel, die mit einem Kolloidbildner oder Gelbildner angemischt wird, **dadurch gekennzeichnet, dass** die Keramik-Pulvermischung, von der ausgegangen wird, Zr(IV)-acetylacetonat enthält.

2. Keramische Einbettmasse nach Anspruch 1, **dadurch gekennzeichnet, dass** die Keramik-Pulvermischung, von der ausgegangen wird, einen Anteil von wenigstens 0,008 Gew. %, vorzugsweise wenigstens 0,05 Gew. % Zr(IV)-acetylacetonat enthält.

3. Keramische Einbettmasse nach Anspruch 1 oder 2, **dadurch gekennzeichnet, dass** die Keramik-Pulvermischung, von der ausgegangen wird, einen Anteil von bis zu 0,5 Gew %, vorzugsweise einen Anteil von bis zu 0,2 Gew. % Zr(IV)-acetylacetonat enthält.

4. Keramische Einbettmasse nach einem der Ansprüche 1 bis 3, **dadurch gekennzeichnet, dass** als Kolloidbildner oder Gelbildner für die keramische Einbettmasse eine wässrige Kieselsol-Lösung mit einem Gehalt von bis zu 40 % vorgesehen ist.

5. Keramische Einbettmasse nach einem der Ansprüche 1 bis 4, **dadurch gekennzeichnet, dass** die Keramik-Pulvermischung, von der ausgegangen wird, MgO enthält, vorzugsweise in einer Menge von 5 % bis 10 %.

6. Keramische Einbettmasse nach einem der Ansprüche 1 bis 5, **dadurch gekennzeichnet, dass** die Keramik-Pulvermischung, von der ausgegangen wird, als phosphathaltiges Bindemittel ein Gemisch aus einem reaktiven MgO sowie NH₄H₂PO₄ enthält.

7. Keramische Einbettmasse nach einem der Ansprüche 1 bis 6, **dadurch gekennzeichnet, dass** die Keramik-Pulvermischung, von der ausgegangen wird, als überwiegenden Bestandteil SiO₂ in der Modifikation als alpha-Quarz und/oder alpha-Cristobalit und/oder amorphes SiO₂ (Glas) enthält.

8. Verfahren zur Herstellung von Präzisions-Gussteilen für dentalmedizinische Anwendungen, bei dem man einen Einbettmassebrei herstellt aus einer Keramik-Pulvermischung enthaltend ein phosphathaltiges Bindemittel, die mit einem Kolloidbildner oder Gelbildner angemischt wird, wobei die Keramik-Pulvermischung einen Anteil an Zr(IV)-acetylacetonat enthält, man den Einbettmassebrei in einen Behälter überführt, in dem sich ein Abdruck des anzufertigenden Gussteils aus einem Wachs- oder einem Kunststoffmaterial befindet, man danach die keramische Einbettmasse abbinden lässt und erwärmt, und wobei man in die aus der Einbettmasse erhaltene heiße Gießform einen Gusswerkstoff umfassend eine flüssige Legierung ausgewählt aus CoCrMo-, CoCrW, CoCrMoW- und Au-Basislegierungen einfüllt.

9. Verfahren zur Herstellung von Präzisions-Gussteilen nach Anspruch 8, **dadurch gekennzeichnet, dass** man einen Brei einer keramischen Einbettmasse mit den Merkmalen eines der Ansprüche 1 bis 7 herstellt.

10. Verwendung einer keramischen Einbettmasse nach einem der Ansprüche 1 bis 7 zur Herstellung passgenauer Teleskop-Gussteile.

11. Verwendung nach Anspruch 10, **dadurch gekennzeichnet, dass** die hergestellten Teleskop-Gussteile passgenaue Teleskop-Kronen sind, insbesondere Doppelkronen bestehend aus einer festsitzenden Primärkrone und einer darüber geschobenen Sekundärkrone.

## Claims

1. A ceramic embedding composition for producing a casting mold for dental medical applications, wherein the embedding mass is produced starting from a ceramic powder mixture containing a phosphate-based binder which is mixed with a colloid-forming agent or a gelling agent, **characterized in that** the ceramic powder mixture used as the starting substance contains Zr(IV) acetylacetonate.

2. The ceramic embedding composition according to Claim 1, **characterized in that** the ceramic powder mixture used as the starting substance contains an amount of at least 0.008% by weight, preferably at least 0.05% by weight Zr(IV) acetylacetonate.

3. The ceramic embedding composition according to Claim 1 or 2, **characterized in that** the ceramic powder mixture used as the starting substance contains an amount of at least 0.5% by weight, preferably an amount of up to 0.2% by weight Zr(IV) acetylacetonate.

4. The ceramic embedding composition according to any one of Claims 1 to 3, **characterized in that** an aqueous silica sol solution containing an amount of up to 40% is provided as the colloid-forming agent or gelling agent for the ceramic embedding composition.

5. The ceramic embedding composition according to any one of Claims 1 to 4, **characterized in that** the ceramic powder mixture used as the starting substance contains MgO, preferably in an amount of 5% to 10%.

6. The ceramic embedding composition according to any one of Claims 1 to 5, **characterized in that** the ceramic powder mixture used as the starting substance contains a mixture of a reactive MgO and NH₄H₂PO₄ as the phosphate-based binder.

7. The ceramic embedding composition according to any one of Claims 1 to 6, **characterized in that** the ceramic powder mixture used as the starting substance contains SiO₂ in the modification as alpha-quartz and/or alpha-crystobalite and/or amorphous SiO₂ (glass) as the predominant component.

8. A method for producing precision cast parts for dental medical applications, in which an embedding composition slurry is prepared from a ceramic powder mixture containing a phosphate-based binder, which is mixed with a colloid-forming agent or a gelling agent, wherein the ceramic powder mixture contains an amount of zr(IV) acetylacetonate, the embedding composition slurry is transferred to a container, which contains an impression of the cast part to be prepared, made of a wax material or a plastic material, then the ceramic embedding composition is allowed to set up and is heated, and wherein a cast material comprising a molten alloy selected from CoCrMo, CoCrW, CoCrMoW and Au base alloys is poured into the hot casting mold prepared from the embedding composition.

9. The method for producing precision cast parts according to Claim 8, **characterized in that** a slurry of a ceramic embedding composition having the features of one of Claims 1 to 7 is prepared.

10. Use of a ceramic embedding composition according to any one of Claims 1 to 7 to produce precision cast telescopic parts.

11. Use according to Claim 10, **characterized in that** the cast telescopic parts produced are precision telescopic crowns, in particular double crowns, consisting of a stationary primary crown and a secondary crown that is pushed over the former.

## Revendications

1. Masse d'enrobage céramique pour la fabrication d'un moule pour des applications médicales dentaires, la masse d'enrobage étant fabriquée à partir d'un mélange de poudre céramique contenant un agent liant phosphaté, que l'on mélange à un support colloïdal et à un agent gélifiant, **caractérisée en ce que** le mélange de poudre céramique de départ contient du Zr(IV)acétylacétonate.

2. Masse d'enrobage céramique selon la revendication 1, **caractérisée en ce que** le mélange de poudre céramique de départ contient une part d'au moins 0,008 % en poids, de préférence d'au moins 0,05 % % en poids de Zr(IV)acétylacétonate.

3. Masse d'enrobage céramique selon la revendication 1 ou la revendication 2, caractérisée ce que le mélange de poudre céramique de départ contient une part de jusqu'à 0,5 % en poids, de préférence une part de jusqu'à 0,2 % en poids de Zr(IV)acétylacétonate.

4. Masse d'enrobage selon l'une quelconque des revendications 1 à 3, caractérisée en qu'en tant que support colloïdal ou qu'agent gélifiant pour la masse d'enrobage céramique, il est prévu une solution aqueuse de sol de silice avec une teneur de jusqu'à 40 %.

5. Masse d'enrobage céramique selon l'une quelconque des revendications 1 à 4, **caractérisée en ce que** le mélange de poudre céramique de départ contient du MgO, de préférence dans une quantité de 5 % à 10 %.

6. Masse d'enrobage céramique selon l'une quelconque des revendications 1 à 5, **caractérisée en ce que** le mélange de poudre céramique de départ contient en tant qu'agent liant contenant du phosphate un mélange d'un MgO réactif, ainsi que de NH₄H₂PO₄.

7. Masse d'enrobage céramique selon l'une quelconque des revendications 1 à 6, **caractérisée en ce que** le mélange de poudre céramique de départ contient en tant que composant majeur du SiO₂ dans la modification sous forme d'alpha-quartz et/ou d'alpha-cristobalite et/ou de SiO₂ (verre).

8. Procédé destiné à fabriquer des pièces moulées de précision pour des applications médicales dentaires, lors duquel on fabrique une pâte de masse d'enrobage en un mélange de poudre céramique contenant un agent liant phosphaté que l'on mélange avec un support colloïdal ou un agent gélifiant, le mélange de poudre céramique contenant une part de Zr(IV)acétylacétonate, on transfère dans un récipient la pâte de masse d'enrobage dans laquelle se trouve une empreinte de la pièce moulée à fabriquer en une matière résineuse ou une matière plastique, on laisse prendre ensuite et on chauffe la masse d'enrobage céramique et remplit le un matériau de moulage comprenant un alliage liquide choisi parmi les alliages basiques de CoCrMo, de CoCrW, de CoCrMoW et d'Au.

9. Procédé destiné à fabriquer des pièces moulées de précision selon la revendication 8, **caractérisé en ce qu'**on fabrique une pâte d'une masse d'enrobage céramique avec les caractéristiques de l'une des revendications 1 à 7.

10. Utilisation d'une masse d'enrobage céramique selon l'une quelconque des revendications 1 à 7 pour la fabrication de pièces moulées télescopes à ajustage précis.

11. Utilisation selon la revendication 10, **caractérisée en ce que** les pièces moulées télescopes à ajustage précis sont des couronnes télescopes à ajustage précis, notamment des doubles couronnes constituées d'une couronne primaire fixe et d'une couronne secondaire emboîtée par-dessus.
